# EUROPÄISCHE PATENTANMELDUNG

(11) **EP 4 119 267 A1**
(43) Veröffentlichungstag der Anmeldung: **18.01.2023**
(21) Anmeldenummer: 21185120.9
(22) Anmeldetag: 12.07.2021
(51) Int. Cl.: B22F 10/28, B22F 10/64, B33Y 10/00, B33Y 40/20, B33Y 70/00, B33Y 80/00, C21D 1/32, C21D 6/00, C22C 33/02, C22C 38/02, C22C 38/22, C22C 38/24, C22C 38/38, C22C 38/44, C22C 38/46, C22C 38/58

(54) **STAHLPULVER, VERWENDUNG EINES STAHLS ZUR ERZEUGUNG EINES STAHLPULVERS UND VERFAHREN ZUR HERSTELLUNG EINES BAUTEILS AUS EINEM STAHLPULVER**

(71) Anmelder: Deutsche Edelstahlwerke Specialty Steel GmbH & Co. KG, 58452 Witten (DE)
(72) Erfinder: Krull, Dr. Hans-Günter, 47506 Neukirchen-Vluyn (DE); Richert, Svenja, 44388 Dortmund (DE); Hill, Dr. Horst, 47929 Grefrath (DE)
(74) Vertreter: Cohausz & Florack

(57) **Zusammenfassung**

Die Erfindung schlägt ein Stahlpulver für eine additive Fertigung eines Stahlbauteils vor, das die Erzeugung von hinsichtlich ihrer Härtbarkeit und Verschleißbeständigkeit optimierten Bauteilen in einem additiven Verfahren auf konventionellen Fertigungsanlagen ermöglicht. Dazu ist das Stahlpulver erfindungsgemäß aus Stahlpartikeln eines Stahls gebildet, der eine Martensitstarttemperatur Ms von höchstens 225 °C aufweist. Dies wird dadurch erreich, dass der betreffende Stahl aus, in Masse-%, aus C: 0,30 - 0,50 %, Si: 0,70 - 1,30 %, Mn: 1,80 - 3,20 %, Cr: 4,5 - 8,5 %, Mo und/oder W, wobei für den Gehalt %Mo an Mo und / oder den Gehalt %W an W gilt: 1,2 % ≤ %Mo + %W/2 ≤ 5 %, V: 0,7 - 1,20 %, optional Ni: ≤ 0,4 % und als Rest aus Eisen und stahltypischen Verunreinigungen besteht, die in Summe höchstens 0,6 Masse-% betragen und zu den bis zu 0,05 % P, bis zu 0,05 % S und bis zu 0,15 % N zählen. Ein aus einem erfindungsgemäßen Stahlpulver durch additive Fertigung erzeugtes Bauteil kann einer konventionellen Austenitisierungs- und Anlassbehandlung unterzogen werden, um seine mechanischen Eigenschaften einzustellen. Optional kann das Bauteil zum selben Zweck eine dem Austenitisieren vorgeschaltete Weichglühbehandlung absolvieren.

## Beschreibung

Die Erfindung betrifft
- ein Stahlpulver für eine additive Fertigung eines Stahlbauteils,
- die Verwendung eines Stahls zur Erzeugung eines solchen Stahlpulvers sowie
- ein Verfahren zur Herstellung eines Stahlbauteils in einem additiven Verfahren, bei dem in einem mehrfach wiederholten Arbeitsablauf auf einer Heizplatte zum Aufbau des Bauteils Stahlpulver aufgetragen wird, das aufgetragene Stahlpulver mittels Elektronen- oder Laserstrahl zu einer Schmelzenportion aufgeschmolzen wird und die jeweils aufgeschmolzene Schmelzenportion zu einem festen Abschnitt des Stahlbauteils abgekühlt wird, wobei das auf diese Weise abschnittsweise wachsende Bauteil während der Herstellung mittels der Heizplatte auf einer Temperatur gehalten wird, die mindestens einer Mindestheiztemperatur Tmin entspricht und höchstens 225 °C beträgt.

Wenn nachfolgend "%"-Angaben zu Stahlzusammensetzungen gemacht werden, so beziehen diese sich jeweils auf die Masse (Angabe in "Masse-"), soweit nicht ausdrücklich etwas anderes genannt ist.

Die Anteile bestimmter Bestandteile am Gefüge eines Stahlwerkstoffs oder eines Stahlbauteils sind im vorliegenden Text in Volumen-% ("Vol.-%") angegeben, soweit nicht ausdrücklich etwas anderes vermerkt ist.

Genauso sind die Anteile, die die verschiedenen Partikel am Gesamtvolumen des erfindungsgemäßen Pulvers einnehmen, jeweils in Vol.-% angegeben, soweit nichts anderes ausdrücklich vermerkt ist.

Die hier in HRC angegebenen Härtewerte sind das Ergebnis einer Härteprüfung nach Rockwell, die gemäß DIN EN ISO 6508-1: 2016-12 durchgeführt worden ist.

Die Herstellung von aus Stahlpartikeln bestehenden Pulvern kann in bekannter Weise durch Verdüsen oder durch eine mechanische Zerkleinerung, wie Nassmahlen, erfolgen. Ebenso ist in an sich ebenfalls bekannter Weise ein mechanisches Legieren von Elementarpulvern möglich, die in den hierzu notwendigen Korngrößen bereitgestellt und in der erfindungsgemäßen Legierungsvorschrift entsprechenden Mengen miteinander vermischt werden.

Unter dem Begriff "additive Fertigungsverfahren" werden alle Herstellverfahren zusammengefasst, bei denen ein Werkstoff zur Erzeugung eines Bauteils hinzugefügt wird. Dieses Hinzufügen erfolgt in der Regel schichtweise. "Additive Herstellverfahren", die in der Fachsprache oft auch als "generative Verfahren" oder allgemein als "3D-Drucken" bezeichnet werden, stehen damit im Gegensatz zu den klassischen subtraktiven Fertigungsverfahren, wie den spanenden Verfahren (z.B. Fräsen, Bohren und Drehen), bei denen Material abgetragen wird, um dem jeweils herzustellenden Bauteil seine Form zu verleihen.

Das additive Fertigungsprinzip ermöglicht es, geometrisch komplexe Strukturen herzustellen, die mit konventionellen Fertigungsverfahren, wie den schon genannten spanabhebenden Verfahren oder Ur- und Umformverfahren (Gießen, Schmieden), nicht oder nur aufwendig realisiert werden können (s. VDI Statusreport "Additive Fertigungsverfahren", September 2014, herausgegeben vom Verein Deutscher Ingenieure e.V., Fachbereich Produktionstechnik und Fertigungsverfahren, www.vdi.de/statusadditiv).

Nähere Definitionen der Verfahren, die unter dem Oberbegriff "Additive Verfahren" zusammengefasst sind, finden sich beispielsweise in den VDI-Richtlinien 3404 und 3405.

Die Verarbeitung von Stahlpulvern in der additiven Fertigung ist heute prinzipiell möglich. Für die Erzeugung der Partikel hierzu geeigneter Stahlpulver werden dabei üblicherweise Stähle eingesetzt, die als schweißbar gelten. Dies sind Stähle mit Kohlenstoffgehalten unter 0,30 Masse-%, vorzugsweise unter 0,20 Masse-%, wobei sich Stähle mit minimierten, im Verunreinigungsbereich liegenden Kohlenstoffgehalten von unter 0,05 Masse-% als besonders geeignet herausgestellt haben.

Für die additive Fertigung sind heute insbesondere die unter den Werkstoffnummern 1.4435 und 1.2709 in der Stahl Eisenliste geführten Stähle im Einsatz, von denen der Stahl 1.4435 auch unter der Bezeichnung "316L" bekannt ist. Diese Stähle zeichnen sich durch einen geringen Kohlenstoffgehalt und eine damit einhergehende gute Schweißbarkeit aus. Schweißbarkeit ist ein wichtiges Kriterium für die Beurteilung der Eignung für die additive Fertigung.

Daneben gibt es neue Entwicklungen auf Basis der Stähle mit den Werkstoffnummern 1.7979 und 1.7980. Diese Stähle sind mit Kohlenstoffgehalten um die 0,2 Masse-% immer noch gut schweißbar. Jedoch weisen sie nach einer für die additive Fertigung typischen schnellen Abkühlung eine Gefügehärte auf, die regelmäßig kleiner 45 HRC ist. Ihre Härte ist damit regelmäßig deutlich geringer als die typischerweise mehr als 55 HRC betragende Härte von Vergütungsstählen, wie dem unter der Werkstoffnummer 1.7225 genormten Stahl, oder von Werkzeugstählen, wie der unter der Werkstoffnummer 1.2343 genormte Stahl und unter der Bezeichnung "H11" oder unter der der Werkstoffnummer 1.2344 und unter der Bezeichnung "H13" bekannte Stahl.

Eine generelle Herausforderung bei der Verarbeitung von Stahlpulvern in der additiven Fertigung besteht darin, dass die dabei jeweils vom Elektronen- oder Laserstrahl, typischerweise unter Vakuum, erfasste Pulverportion sehr schnell aufgeschmolzen und das so gebildete kleine Schmelzenvolumen anschließend unter Anbindung an den zuvor schon verfestigten Abschnitt des Bauteils rasch abgekühlt wird. In Folge dieser schnellen, prozessbedingt hohen Abkühlrate mit sich bringende Abkühlung kommt es zu hohen thermischen Spannungen, die insbesondere bei Stählen mit höheren Kohlenstoffgehalten zu Rissen im Bauteil führen können.

. Bei der konventionellen schmiedetechnischen Verarbeitung der voranstehend genannten Stählen können lokale, thermisch bedingt auftretende Spannungen durch plastische Verformungen ausgeglichen werden und so die Gefahr der Rissbildung minimiert werden. Diese Möglichkeit ist bei der additiven Herstellung von Bauteilen jedoch regelmäßig nicht gegeben.

Um die bei der additiven Verarbeitung von Stahlpulvern auftretenden thermischen Spannungen zu minimieren, erfolgt in der Praxis der schichtweise Aufbau des jeweiligen Bauteils auf einer Heizplatte, die in der Fachsprache auch als "Heizbett" bezeichnet wird. Die Heizplatte wird dabei so stark beheizt, dass das Bauteil während des Fertigungsvorgangs auf einem Temperaturniveau gehalten wird, bei dem zu starke Temperaturdifferenzen zwischen der jeweils aus dem aufgetragenen Pulver gebildeten Schmelze und dem schon verfestigten Teil des Bauteils vermieden und damit einhergehend die Ausprägung unerwünschter Gefügebestandteile im Bauteil vermieden wird.

Der über die Heizplatte erfolgende Wärmeeintrag in das Bauteil wird dadurch erschwert, dass Stahlpulver in der Regel eine gegenüber aus demselben Stahl, jedoch in konventioneller Massivumformung gefertigten Bauteilen deutlich verminderte Wärmeleitfähigkeit besitzen. Dies bedingt, dass in der Praxis die Wahl höherer Heiztemperaturen der Heizplatte bei der Verarbeitung von Stahlpulvern, die zur Vermeidung von Rissbildung im aus ihnen erzeugten Bauteil eine stärkere Beheizung erfordern, nur bis zu einer Bauhöhe von typischerweise weniger als 200 mm zu verbesserten Resultaten führt. Gleichzeitig besteht bei der praktischen additiven Verarbeitung von Stahlpulvern in einer Umgebung, in der Temperaturen herrschen, die dauerhaft über 200 °C liegen, die Gefahr, dass sich die Qualität des Pulvers aufgrund von Oxidation verschlechtert, die vor seinem Auftreffen auf das Bauteil eintritt.

Vor diesem Hintergrund sind.für die industrielle Fertigung zur Verfügung stehende Vorrichtungen zur additiven Fertigung, sofern sie überhaupt dieses Ausstattungsmerkmal aufweisen, typischerweise mit Heizplatten ausgerüstet, die das jeweilige Bauteil auf Temperaturen von maximal 225 °C aufheizen können, wobei die Heizplattentemperaturen regelmäßig auf ≤ 200 °C beschränkt sind.

Ein Beispiel für ein Einsatzgebiet, für das sich die additive Fertigung im besonderen Maße eignet, ist aufgrund der geringen Losgrößen der Werkzeugbau. Aufgrund ihres Eigenschaftsspektrums und insbesondere ihrer hohen Härte sind zu diesem Zweck die oben schon erwähnten Warmarbeitsstähle 1.2343 und 1.2344 besonders geeignet. Um jedoch durch additive Fertigung aus Stahlpulver, die aus diesen Stählen bestehen, betriebssicher rissfreie Bauteile zu erzeugen, sind spezielle Maßnahmen erforderlich. So hat sich gezeigt, dass es zur Vermeidung von thermischen Spannungen, die die Ursache für die Rissbildung sind, erforderlich ist, die Heizplatte, auf der das jeweilige Bauteil aufgebaut wird, auf mindestens 300 °C, besser auf mehr als 400 °C, zu erwärmen. Erst diese hohen Vorheiztemperaturen gewährleisten eine Verarbeitung ohne Austenit-Martensit-Umwandlung, weil das Bauteil während seiner Erzeugung dauerhaft deutlich oberhalb der Temperatur gehalten wird, bei der es bei einer Abkühlung zur Martensitbildung kommt.

Vor diesem Hintergrund hat sich die Aufgabe ergeben,
- ein Stahlpulver anzugeben, das die Erzeugung von hinsichtlich ihrer Härtbarkeit und Verschleißbeständigkeit optimierten Bauteilen in einem additiven Verfahren ermöglicht, ohne dass dazu über den Stand der Technik hinausgehende fertigungstechnische Maßnahmen erforderlich sind,
- einen Stahl vorzuschlagen, der für die Erzeugung eines entsprechenden Stahlpulvers besonders geeignet ist,
   und
- ein Verfahren zu nennen, welches es erlaubt, durch additive Fertigung Bauteile von optimierter Härtbarkeit und Verschleißbeständigkeit herzustellen.

Zur Lösung dieser Aufgabe hat die Erfindung ein Stahlpulver vorgeschlagen, das mindestens die in Anspruch 1 angegebenen Merkmale aufweist.

Die voranstehend angegebene Aufgabe wird gemäß der Erfindung auch durch die in Anspruch 12 angegebene Verwendung eines Stahls gelöst.

Schließlich nennt die Erfindung in Anspruch 13 ein die voranstehend angegebene Aufgabe gleichfalls lösendes Verfahren.

Vorteilhafte Ausgestaltungen der Erfindung sind in den abhängigen Ansprüchen angegeben und werden wie der allgemeine Erfindungsgedanke nachfolgend im Einzelnen erläutert.

Ein erfindungsgemäßes Stahlpulver für eine additive Fertigung eines Stahlbauteils ist demnach aus Stahlpartikeln gebildet, die aus einem Stahl erzeugt sind, der eine Martensitstarttemperatur Ms von höchstens 225 °C aufweist und, in Masse-%, aus
C: 0,30 - 0,50 %,
Si: 0,70 - 1,30 %,
Mn: 1,80 - 3,20 %,
Cr: 4,5 - 8,5 %,
Mo und/oder W, wobei für den Gehalt %Mo an Mo und / oder den Gehalt %W an W gilt: 1,2 % ≤ %Mo + %W/2 ≤ 5 %,
V: 0,7 - 1,20 %,
optional Ni: ≤ 0,4 %,
und als Rest aus Eisen und stahltypischen Verunreinigungen besteht, die in Summe höchstens 0,6 Masse-% betragen und zu den bis zu 0,05 % P, insbesondere bis zu 0,030 % P, bis zu 0,05 % S, bis zu 0,020 % S und bis zu 0,15 % N, insbesondere bis zu 0,10 % N, zählen.

Ausgehend von der Zusammensetzung des Werkzeugstahls 1.2344, der aus, in Masse-%, 0,37 - 0,42 % C, 1,00 - 1,15 % Si, 0,45 - 0,50 % Mn, 4,85 - 5,20 % Cr, 1,25 - 1,40 % Mo, bis zu 0,40 % Ni, und 0,90 - 1,10 % V, Rest Fe und unvermeidbaren Verunreinigungen besteht, schlägt die Erfindung eine Stahllegierung vor, die derart modifiziert ist, dass die Martensitstarttemperatur ("Ms-Temperatur") eines den Maßgaben der Erfindung genügenden Stahls höchstens 225 °C, insbesondere weniger als 225 °C, beträgt, wobei die Martensitstarttemperatur eines erfindungsgemäß legierten Stahls typischerweise höchstens 200 °C ist.

Die Martensitstarttemperatur eines erfindungsgemäß legierten, für die Erzeugung von Stahlpulver für ein additives Fertigungsverfahren bestimmten Stahls liegt in dem Bereich, in dem üblicherweise die maximale Vorheiztemperatur der Heizplatten von Anlagen zum additiven Fertigen, in der Fachsprache auch "3D-Drucker" genannt, liegen.

Mit der Erfindung steht somit ein Stahlpulver zur Verfügung, das eine aus betriebstechnischer Sicht robuste und kostengünstige Verarbeitung mit konventionellen Anlagen zur additiven Fertigung ermöglicht, bei denen neben den üblichen Heizplatten keine weiteren speziellen Erwärmungseinrichtungen vorgesehen sind.

Der erfindungsgemäße Stahl weist somit während des Druckvorgangs ein überwiegend austenitisches Gefüge auf, wobei bis zu 2 Vol.-% Martensit und/oder Bainit im Gefüge vorhanden sein können. Derart begrenzte Martensit- und/oder Bainitgehalte beeinflussen das Rissverhalten des erfindungsgemäßen Werkstoffs auch dann nicht negativ, wenn bei der additiven Verarbeitung Wärmespannungen im sich verfestigenden bzw. verfestigten Bauteil auftreten. Der Grund hierfür sind hohe Restaustenitanteile von mehr als 10 Vol.-%, die auch noch nach der Abkühlung im Gefüge eines aus erfindungsgemäßem Stahlpulver additiv gefertigten Bauteils vorhanden sind. Diese hohen Restaustenitanteile wirken aufgrund ihrer guten Verformbarkeit der Entstehung von Rissen entgegen. Typischerweise beträgt der Restaustenitanteil im Gefüge eines aus erfindungsgemäßem Stahlpulver additiv gefertigten Bauteils bis zu 50 Vol.-%.

Nach Abschluss des Druckvorganges besteht das Gefüge eines aus erfindungsgemäßem Stahlpulver additiv erzeugten Bauteils somit bis auf geringe Anteile von höchstens 2 Vol.-% an sonstigen, technisch unvermeidbaren Bestandteilen typischerweise aus Bainit und / oder Martensit, wobei Bainit und Martensit insbesondere auch als Gemisch vorliegen können, sowie jeweils einem hohen Anteil aus Restaustenit von mehr als 10 Vol.-%. Die Zusammensetzung des Gefüges bedingt eine hohe Härte des erhaltenen Bauteils. Durch eine Wärmebehandlung des Bauteils können die mit Blick auf seine Gebrauchseigenschaften oder seine Bearbeitbarkeit jeweils gewünschten mechanischen Eigenschaften eingestellt werden.

Die aus erfindungsgemäß legiertem Stahlpulver durch ein additives Fertigungsverfahren erzeugten Bauteile lassen sich unkompliziert wärmebehandeln. Dementsprechend kann der Verwender des erfindungsgemäßen Stahlpulvers die von ihm additiv gefertigten Bauteile in den schon bei ihm vorhandenen, für eine konventionelle Wärmebehandlung ausgerüsteten Aggregaten problemlos der jeweils zur Einstellung des gewünschten Eigenschaftsprofil erforderlichen Wärmebehandlung unterziehen.

Allerdings ist die Durchvergütbarkeit des erfindungsgemäß legierten Stahls gegenüber dem Standardwerkstoff, der den Ausgangspunkt für die Erfindung gebildet hat, stark vergrößert. Daraus ergibt sich, dass eine übliche Weichglühbehandlung, bei der das jeweilige Bauteil einem Austenitisieren und einer langsamen Ofenabkühlung unterzogen wird, nicht angewendet werden kann. Vielmehr ist zum Weichglühen das Bauteil bei Temperaturen zu halten, die unterhalb der Umwandlungstemperatur von Ferrit zu Austenit liegen.

Kohlenstoff ("C") ist im Stahl der Stahlpartikel eines erfindungsgemäßen Stahlpulvers in Gehalten von 0,30 - 0,50 Masse-% enthalten, um die Härte des Stahls zu steigern und durch Bildung von Karbiden zur Erhöhung der Verschleißbeständigkeit beizutragen. Darüber hinaus senkt Kohlenstoff die Martensitstarttemperatur Ms. Um diese Effekte zu erreichen, sind mindestens 0,30 Masse-% C erforderlich, wobei sich die positive Wirkung von C besonders sicher nutzen lässt, wenn der C-Gehalt mindestens 0,35 Masse-% beträgt. In zu hoher Konzentration würde C jedoch die Zähigkeit vermindern. Daher ist der C-Gehalt auf höchstens 0,5 Masse-% beschränkt, wobei sich ungünstige Auswirkungen der Anwesenheit von C insbesondere dadurch vermeiden lassen, dass der C-Gehalt auf höchstens 0,45 Masse-% begrenzt wird.

Silizium ("Si") ist im erfindungsgemäß legierten Stahl der Stahlpartikel des erfindungsgemäßen Stahlpulvers in Gehalten von 0,70 - 1,30 Masse-% vorhanden. Si ist ein Mischkristallbildner und steigert die Durchvergütbarkeit des Stahls, würde aber bei zu hohen Gehalten die Zähigkeit des Stahls beeinträchtigen. Besonders sicher lassen sich die Vorteile der Anwesenheit von Si nutzen, wenn der Si-Gehalt mindestens 0,80 Masse-%, insbesondere mindestens 0,90 Masse-%, beträgt. Negative Auswirkungen der Anwesenheit von Si lassen sich sicher dadurch vermeiden, dass der Si-Gehalt auf höchstens 1,20 Masse-%, insbesondere höchstens 1,10 Masse-%, beschränkt wird.

Mangan ("Mn") steigert in Gehalten von 1,80 - 3,20 Masse-% im Stahl der Stahlpartikel eines erfindungsgemäßen Stahlpulvers ebenfalls die Durchvergütbarkeit und trägt wesentlich zur erfindungsgemäß angestrebten Absenkung der Martensitstarttemperatur bei. Dies gilt insbesondere bei Mn-Gehalten von bis zu 3,0 Masse-%. Mn-Gehalte von mindestens 2,00 Masse-% bewirken die angestrebte Absenkung der Ms-Temperatur insbesondere dann sicher, wenn Mn hierzu alleine eingesetzt werden soll. Darüber hinaus wirkt sich Mn bei der Erzeugung des erfindungsgemäßen Stahlpulvers günstig aus, indem es zur Viskosität der zu dem Stahlpulver verdüsten Stahlschmelze beiträgt.

Der durch die gegenüber dem Stand der Technik erfindungsgemäß erhöhte Zugabe von mindestens 1,8 Masse-%, insbesondere mindestens 2,0 Masse-%, bewirkte Absenkung der Martensitstarttemperatur steht gegenüber, dass durch die erhöhten Gehalte an Mn die Härte des so modifizierten Stahls schneller abfällt als bei dem Referenzstahl 1.2344. Erfindungsgemäße Stähle, die dieses Verhalten zeigen, eignen sich dennoch für die Erzeugung von solchen Bauteilen durch ein additives Verfahren, die im praktischen Einsatz Temperaturen ausgesetzt sind, bei denen es allenfalls zu geringen Anlasseffekten kommt. So eignet sich erfindungsgemäßes Stahlpulver, dessen Stahlpartikel aus einem Stahl bestehen, bei dem nur der Mn-Gehalt gegenüber dem Referenzstahl 1.2344 erhöht ist, zur Erzeugung von Formen für die Verarbeitung von Kunststoffen und desgleichen.

Stähle, die ein für diesen Verwendungszweck geeignetes Anlassverhalten aufweisen, enthalten typischerweise Gehalte %Mo an Molybdän ("Mo") und Gehalte %W an Wolfram ("W") für die gilt 1,2 Masse-% ≤ %Mo + %W/2 ≤ 1,4 Masse-%.

Soll dagegen ein erfindungsgemäß legierter Stahl so ertüchtigt werden, dass er auch die Anforderungen erfüllt, die sich bei einem Einsatz bei höheren Temperaturen ergeben, so kann eine hohe Anlassbeständigkeit durch eine erhöhte Zugabe an Mo und / oder W erzielt werden.. Mo und W können hier alternativ oder in Kombination miteinander zugegeben werden. Dabei wirkt Molybdän stärker als Wolfram. Mo kann beispielsweise aus wirtschaftlichen Gründen oder aus Gründen der Verfügbarkeit durch W substituiert werden, indem an Stelle des jeweils vorgesehenen Mo-Gehalts etwa doppelt so viel Wolfram zugegeben wird. Für die angestrebte Einstellung der Anlassbeständigkeit sind dabei Gehalte %Mo an Molybdän ("Mo") und/oder %W an Wolfram ("W") erforderlich, die die Bedingung
1,4 Masse-% < %Mo + %W/2 ≤ 5 Masse-%,
insbesondere 1,6 Masse-% < %Mo + %W/2 ≤ 5 Masse-%,
wobei sich Mo-Gehalte %Mo und/oder W-Gehalte %W als besonders geeignet herausgestellt haben, für die gilt
1,7 Masse-% < %Mo + %W/2 ≤ 5 Masse-%.

Dabei können diese Maßgaben, wie gesagt, durch Mo alleine (also beispielsweise 1,7 Masse-% ≤ %Mo ≤ 5 Masse-%, W nicht in wirksamen Gehalten vorhanden), durch W alleine (also beispielsweise 1,7 ≤ %W/2 ≤ 5 Masse-%, Mo nicht in wirksamen Gehalten anwesend) oder durch gemeinsam vorhandene wirksame Gehalte %Mo an Mo und %W an W erfüllt werden (also beispielsweise 1,7 Masse-% ≤ %Mo + %W/2 ≤ 5 Masse) erfüllt werden. Dies gilt insbesondere dann, wenn Mo und / oder W in Gehalten vorhanden sind, für die gilt, 1,80 Masse-% ≤ %Mo + %W/2, insbesondere 2,00 Masse-% ≤ %Mo + %W/2 oder 2,2 Masse-% ≤ %Mo + %W/2.

Stahlpulver, deren Stahlpartikel aus in der voranstehend erläuterten Weise erfindungsgemäß optimiertem Stahl besteht, eignet sich beispielsweise für die additive Fertigung von Schmiedegesenken oder desgleichen.

W und Mo bilden mit C Karbide, erhöhen so die Verschleißbeständigkeit und verbessern die Durchvergütbarkeit. Dabei können Gehalte an Mo jeweils durch den doppelten Gehalt an W substituiert werden und umgekehrt. Mo und W tragen gleichzeitig neben Vanadium wesentlich zum Sekundärhärteeffekt bei. Durch die erfindungsgemäße Begrenzung der aus dem Mo-Gehalt %Mo und der Hälfte des W-Gehalts %W gebildeten Summe %Mo + %W/2 auf höchstens 5 Masse-%, insbesondere höchstens 4 Masse-% oder höchstens 3 Masse-%, lassen sich dabei zu frühe Karbidausscheidungen vermeiden.

Chrom ("Cr") ist im Stahl der Stahlpartikel des erfindungsgemäßen Stahlpulvers in Gehalten von 4,5 - 8,5 Masse-% vorhanden, um durch Bildung von Karbiden die Härte des Stahls zu erhöhen, die Verschleißbeständigkeit zu verbessern und ebenfalls die Durchvergütbarkeit zu optimieren. Diese positiven Einflüsse der Anwesenheit von Cr lassen sich bei Gehalten von mindestens 4,75 Masse-%, insbesondere mindestens 4,80 Masse-%, besonders sicher nutzen, wobei bei Gehalten von höchstens 5,35 Masse-%, insbesondere höchstens 5,3 Masse-%, die Wirkung von Cr besonders effektiv eintritt.

Cr kann zusätzlich genutzt werden, um die Martensitstarttemperatur Ms weiter abzusenken. Dieser Effekt tritt bei Gehalten von mindestens 5,5 Masse-%, insbesondere mindestens 6,5 Masse-%, ein. Durch Anwesenheit von Cr in diesen Gehaltsbereichen lässt sich die Martensitstarttemperatur auf unter 170 °C begrenzen. Auf diese Weise lässt sich das erfindungsgemäße Stahlpulver zur additiven Fertigung auch in solchen konventionellen Fertigungsanlagen verwenden, bei denen bis zu 200 °C oder bis zu 225 °C reichende Heiztemperaturen der Heizplatte nicht ausreichend sicher erreicht und aufrechterhalten werden können. Cr-Gehalte von mehr als 8,5 Masse-% sollten vermieden werden, damit die Martensitfinish-Temperatur, d.h. die Temperatur, ab der der Volumenanteil an Martensit im Gefüge nicht mehr weiter ansteigt, nicht auf eine Temperatur von weniger als 0 °C sinkt, was ein Tiefkühlen des jeweils erzeugten Bauteils erforderlich machen würde.

Vanadium ("V") ist in Gehalten von 0,7 - 1,20 Masse-% im Stahl der Stahlpartikel des erfindungsgemäßen Stahlpulvers als starker Karbidbildner und wesentlicher Bestandteil für den Sekundärhärteeffekt enthalten. Die mit V gebildeten Karbide tragen dabei entscheidend zum Werkzeugverschleiß bei. Die positiven Einflüsse der Anwesenheit von V lassen sich bei Gehalten von mindestens 0,80 Masse-%, insbesondere mindestens 0,90 Masse-%, besonders sicher nutzen, wobei bei Gehalten von höchstens 1,10 Masse-%, insbesondere höchstens 1,00 Masse-%, die Wirkung von V besonders effektiv eintritt.

Nickel ("Ni") kann optional im Stahl der Stahlpartikel des erfindungsgemäßen Stahlpulvers in Gehalten von bis zu 0,4 Masse-% vorhanden sein, um die Martensitstarttemperatur weiter abzusenken.

Zu den herstellungsbedingt unvermeidbaren Verunreinigungen, deren Gehalte in Summe höchstens 0,6 Masse-% betragen dürfen, gehören Gehalte an allen Legierungselementen, die im Zuge seiner Erschmelzung und Weiterverarbeitung in den Stahl gelangen, dabei jedoch jeweils in Gehalten vorliegen, in denen sie keine Wirkung in Bezug auf die hier genutzten Eigenschaften des erfindungsgemäß für die Stahlpartikel des Stahlpulvers ausgewählten Stahls haben. Zu den Verunreinigungen gehören Gehalte an Phosphor ("P") von bis zu 0,05 Masse-%, an Schwefel ("S") von höchstens 0,05 Masse-%, insbesondere höchstens 0,02 Masse-%, und Stickstoff ("N") von bis zu 0,15 Masse-%, bevorzugt höchstens 0,10 Masse-% oder höchstens 0,05 Masse-%.

Indem mehr als 90 Masse-%, insbesondere mehr als 95 Masse-%, der Stahlpartikel eines erfindungsgemäßen Stahlpulvers einen Partikeldurchmesser von 10 - 65 µm aufweisen, kann sichergestellt werden, dass mit solchem Stahlpulver mit konventionellen Vorrichtungen der eingangs erläuterten Art durch additive Fertigung zuverlässig Bauteile erzeugt werden können. Die Selektion der geeignet großen Stahlpartikel kann in üblicher Weise durch Sieben und Sichten erfolgen. Typischerweise werden dabei bis zu 2 Masse-% an Körnern, deren Durchmesser oberhalb des für die Partikeldurchmesser erfindungsgemäß vorgegebenen Bereichs liegen, und bis zu 5 Masse-% an Körnern zugelassen, deren Durchmesser unterhalb des erfindungsgemäßen Partikeldurchmesserbereichs liegen.

Den voranstehenden Erläuterungen entsprechend schlägt die Erfindung vor, einen Stahl, der eine Martensitstarttemperatur Ms von höchstens 225 °C aufweist und, in Masse-%, aus C: 0,30 - 0,50 %, Si: 0,70 - 1,30 %, Mn: 1,80 - 3,20 %, Cr: 4,5 - 8,5 %, Mo und/oder W, wobei für den Gehalt %Mo an Mo und / oder den Gehalt %W an W gilt: 1,8 % ≤ %Mo + %W/2 ≤ 5 %, V: 0,7 - 1,20 %, optional Ni: ≤ 0,4 %, und als Rest aus Eisen und stahltypischen Verunreinigungen besteht, die in Summe höchstens 0,6 Gew.-% betragen und zu den bis zu 0,05 % P, insbesondere bis zu 0,030 % P, bis zu 0,05 % S, insbesondere bis zu 0,020 % S, und bis zu 0,15 % N, insbesondere bis zu 0,10 % N, zählen, zur Erzeugung von Stahlpartikeln eines Stahlpulvers zur Herstellung von Stahlbauteilen durch ein additives Verfahren zu verwenden.

Aufgrund seiner durch die erfindungsgemäße Legierung des Stahls seiner Stahlpartikel erzielten Eigenschaften ist das Stahlpulver für die Verwendung zur Herstellung von Bauteilen, die sich durch eine hohe Härte und Verschleißbeständigkeit durch ein additives Fertigungsverfahren auszeichnen, im besonderen Maße geeignet. So lassen sich mit erfindungsgemäßem Stahlpulver nicht nur durch additive Fertigung Formen für den Kunststoffbau, sondern allgemein Bauteile erzeugen, die üblicherweise aus den eingangs erläuterten Warmarbeitsstählen, insbesondere dem Warmarbeitsstahl 1.2344, durch Verfahren der Massivumformung, insbesondere Schmieden, hergestellt werden.

Das erfindungsgemäße Verfahren zum Herstellen eines Stahlbauteils in einem additiven Verfahren, bei dem in einem mehrfach wiederholten Arbeitsablauf auf einer Heizplatte, die auf eine Heiztemperatur aufgeheizt ist, zum Aufbau des Bauteils Stahlpulver aufgetragen wird, das aufgetragene Stahlpulver mittels Elektronen- oder Laserstrahl zu einer Schmelzenportion aufgeschmolzen wird und die jeweils aufgeschmolzene Schmelzenportion zu einem festen Abschnitt des Stahlbauteils abgekühlt wird, sieht vor, dass ein erfindungsgemäß beschaffenes Stahlpulver verwendet wird, dass das aus dem erfindungsgemäßen Stahlpulver durch additive Fertigung erzeugte Bauteil während der Herstellung mittels der Heizplatte auf einer Temperatur gehalten wird, die 125 °C bis 225 °C beträgt.

Das so erhaltene Bauteil kann optional einer Weichglühbehandlung unterzogen werden, bei der es auf einer Temperatur von 650 - 750 °C gehalten wird. Durch das Halten in diesem Temperaturbereich kann die Härte des Bauteils vermindert werden, um eine mechanische Bearbeitung zu erleichtern. Die hierzu gewählte Glühdauer ist abhängig von der Bauteilgröße und Dicke der Wände des Bauteils. Als Faustformel gilt in der Praxis, dass für die Weichglühbehandlung eine Dauer von 15 min pro 1 cm der Bauteildicke vorgesehen werden sollte. In der betrieblichen Praxis sind Glühdauern von 5 min bis 120 min typisch.

Nach der Herstellung des Bauteils und der gegebenenfalls durchgeführten Weichglühbehandlung wird das jeweilige fertig geformte Bauteil bei einer 850 - 1200 °C betragenden Austenitisierungstemperatur über eine metallurgische Haltezeit von mehr als 10 min austenitisiert, um seine Festigkeit und Zähigkeit einzustellen. Wie die optionale durchgeführte Weichglühbehandlung wird die Austenitisierung in konventioneller Weise über eine Dauer durchgeführt, die in Abhängigkeit von der Bauteilgröße ausreicht, um die mit der Austenitisierung angestrebte Einstellung des Gefüges und der Eigenschaften über das gesamte Volumen des Bauteils optimal gleichmäßig verteilt zu erhalten. In der Praxis typischerweise für die Austenitierungsbehandlung vorgesehene Behandlungsdauern betragen 10 min bis 90 min.

Schließlich wird das austenitisierte Bauteil einer Anlassbehandlung bei einer 180 - 625 °C betragenden Anlasstemperatur unterzogen. Diese Anlassbehandlung wird ebenfalls über eine Dauer durchgeführt, die abhängig von der Größe und dem Volumen des jeweiligen Bauteils ist, um die schon erwähnte, sich auch im Zuge der additiven Fertigung bereits einstellende Festigkeitssteigerung durch Sonderkarbidbildung noch einmal gezielt zu unterstützen. Typischerweise liegt die Dauer der Anlassbehandlung im Bereich von 15 min bis 120 min. Durch eine zwei- oder mehrfache Wiederholung kann die Wirkung der Anlassbehandlung in an sich bekannter Weise verstärkt werden.

Die Erfindung ermöglicht es, die maximale Erwärmungstemperatur der Heizplatte zur Durchführung des erfindungsgemäßen Verfahrens auf höchstens 200 °C zu beschränken, da es, wie oben erläutert, im Rahmen der erfindungsgemäßen Legierungsvorschrift problemlos möglich ist, durch legierungstechnische Maßnahmen die Martensitstarttemperatur des Stahls, aus dem die Stahlpartikel des erfindungsgemäßen Stahlpulvers bestehen, auf höchstens 200 °C einzustellen. Dementsprechend reichen für die erfindungsgemäßen Zwecke regelmäßig Anlagen zur additiven Fertigung aus, deren Heizplatten auf 125 - 200 °C eingestellt werden können.

Nachfolgend wird die Erfindung anhand von Ausführungsbeispielen näher erläutert. Es zeigen:

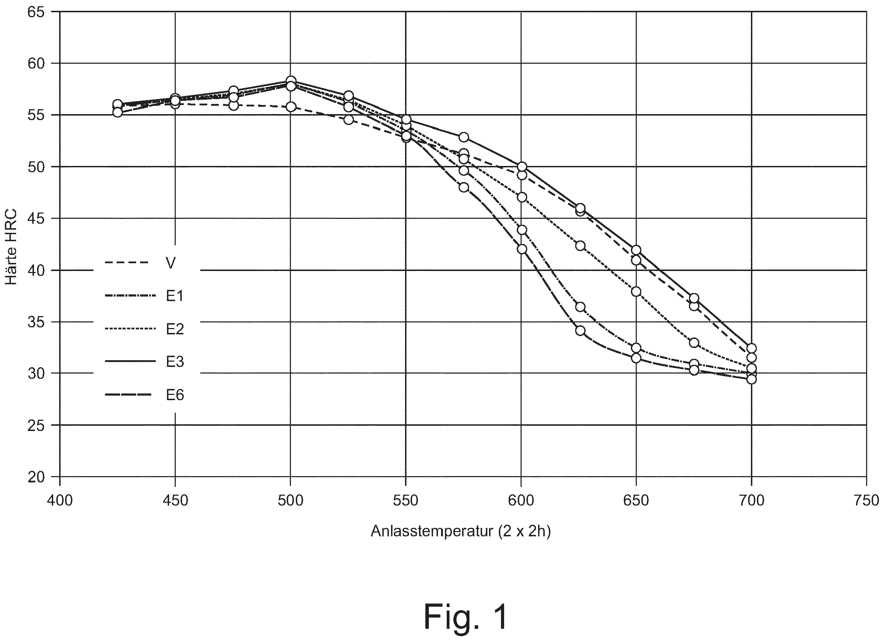

- Fig. 1: ein Diagramm, in dem das Anlassverhalten bei einer zweimal über eine Dauer von jeweils 2 Stunden durchgeführten Anlassbehandlung von vier erfindungsgemäß legierten Stählen E1 - E3, E6 und einem zum Vergleich angeführten, nicht erfindungsgemäß legierten Vergleichsstahlt V gegenüber gestellt ist;

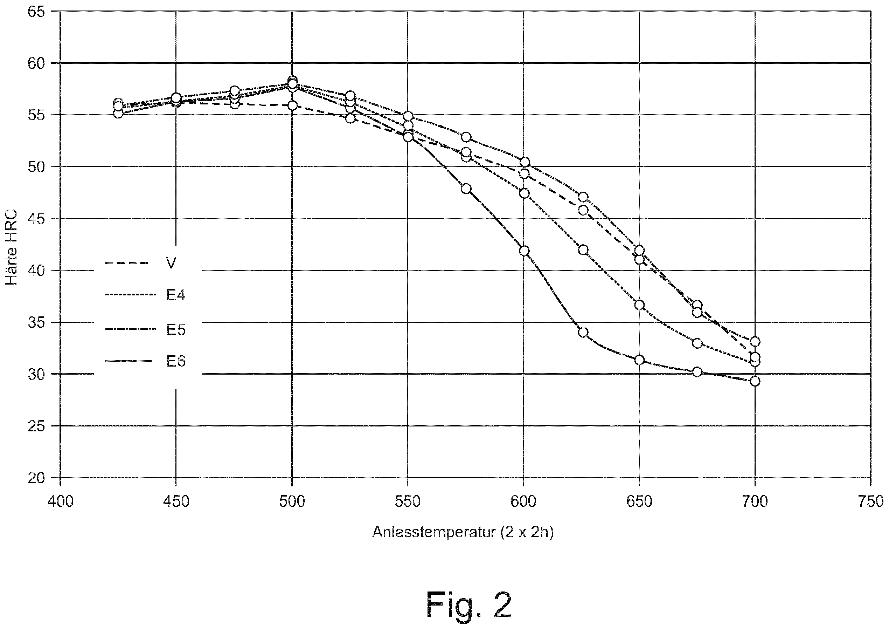

- Fig. 2: ein Diagramm, in dem das Anlassverhalten bei einer zweimal über eine Dauer von jeweils 2 Stunden durchgeführten Anlassbehandlung von drei erfindungsgemäß legierten Stählen E4, E5 und E6 und ebenfalls dem zum Vergleich angeführten, nicht erfindungsgemäß legierten Vergleichsstahl V gegenüber gestellt ist.

Zur Erprobung der Erfindung sind erfindungsgemäß legierte Stähle E1 - E9 und ein Vergleichsstähle V erschmolzen und in bekannter Weise im Gasstrom jeweils zu Stahlpulver mit einer Korngröße von 5 - 150 µm verdüst worden. Die Zusammensetzungen der erfindungsgemäß legierten Stähle E1 bis E9 und des Vergleichsstahls V sind in Tabelle 1 angegeben.

Ebenso sind in Tabelle 1 die für die Stähle E1 - E9 und V ermittelten Martensitstarttemperaturen Ms angegeben.

Die Zusammensetzung des Vergleichsstahls V entspricht der in der Praxis gebräuchlichen Zusammensetzung des bekannten Warmarbeitsstahls mit der Werkstoffnummer 1.2344. Seine Martensitstarttemperatur liegt bei 360 °C und damit deutlich über der Heiztemperatur von 200 °C bis 225 °C, mit denen Heizplatten von konventionellen Anlagen zur additiven Fertigung betrieben werden.

Der erfindungsgemäße Stahl E6 enthält gegenüber dem Vergleichsstahl V einen höheren Mn-Gehalt, jedoch Mo- und/oder W-Gehalte, die im Bereich der für den Vergleichsstahls V vorgesehenen Gehalten liegen. Durch den gegenüber dem Stand der Technik erhöhten Mn-Gehalt liegt die Martensitstarttemperatur Ms des Stahls E6 mit 221 °C in einem Bereich, der diesen Stahl für die additive Fertigung in einer konventionellen 3D-Druckanlage geeignet macht.

Die erfindungsgemäßen Stähle E1 - E5 sind gegenüber dem erfindungsgemäßen Stahl E6 zusätzlich mit Mo und/oder W in Gehalten legiert, die die Anforderung 1,7 Masse-% ≤ %Mo + %W/2 ≤ 5 Masse.-% (%Mo = jeweiliger Mo-Gehalt, %W = jeweiliger W-Gehalt) erfüllen. Bei den derart legierten Stählen E1 - E5 ist durch die Anwesenheit von ausreichenden Gehalten an Mo und / oder W der Härteabfall auch mit steigender Temperatur deutlich geringer als bei dem die Referenz bildenden Vergleichsstahls V und dem erfindungsgemäßen Stahl E6. Dieses Verhalten macht die erfindungsgemäßen Stahlvarianten E1 - E5 besonders geeignet für Anwendungen, bei denen die für konventionelle Warmarbeitsstähle typischen hohen Anforderungen an die Anlassbeständigkeit gestellt werden, wogegen die Anlassbeständigkeit des Stahls E6 ausreicht für die Herstellung von Kunststoffformen, bei deren Einsatz weniger hohe Temperaturen auftreten.

Das Anlassverhalten der erfindungsgemäßen Stähle E1 - E6 und des als Referenz herangezogenen Vergleichsstahls V ist in den Figuren 1 und 2 dargestellt. Ersichtlich nimmt bei den erfindungsgemäßen Stählen E1 - E5, die nicht nur gegenüber dem Vergleichsstahl V höhere Mn-Gehalte, sondern auch den Maßgaben der Erfindung genügende Gehalte an Mo und/oder W aufweisen, die Härte bei einer in konventioneller Weise zweimal über jeweils zwei Stunden durchgeführten Anlassbehandlung mit steigenden Temperaturen deutlich langsamer ab. Dies gilt insbesondere für die erfindungsgemäßen Stähle E3 bis E5, da diese Mo-Gehalte %Mo und W-Gehalte %W aufweisen, für die gilt %Mo + %W/2 ≥ 2,00 Masse-%. Dabei bestätigt sich, dass durch die Zugabe ausreichender Mengen an W die Gehalte an Mo substituiert werden können. So weisen die erfindungsgemäßen Stähle E3 (Mo-Gehalt %Mo = 2,05 Masse-%, W-Gehalt %W mit 0,03 Masse-% im unwirksamen Verunreinigungsbereich, %Mo + %W/2 = 2,065 Masse-%) und der erfindungsgemäße Stahl E5 (Mo-Gehalt %Mo = 1,3 Masse-%, W-Gehalt %W = 2,23 Masse-%, %Mo + %W/2 = 2,23 Masse-%), nicht nur eine praxisgerechte Martensitstarttemperatur von jeweils < 225 °C auf, sondern auch eine Anlassbeständigkeit auf, die der Anlassbeständigkeit des Referenz-Vergleichsstahls V durchweg überlegen ist.

Die erfindungsgemäßen Stähle E7 - E9 weisen zusätzlich zu den gegenüber dem Vergleichsstahl V erhöhten Mn- sowie Mo- und/oder W-Gehalten auch erhöhte Cr-Gehalte auf. Infolgedessen ist bei vergleichbarer Anlassbeständigkeit ihre Martensitstarttemperatur Ms noch einmal deutlich gegenüber der Martensitstarttemperatur Ms der erfindungsgemäßen Ausführungsbeispiele E1 bis E6 abgesenkt.

Mit der durch die erfindungsgemäße Legierung verliehenen Eigenschaftskombination eigneten sich die erfindungsgemäß aus den Stählen E1 - E9 erzeugten Stahlpulver zur Verarbeitung in konventionellen Anlagen zur additiven Fertigung von Bauteilen, zu denen beispielsweise so genannte "Selective Laser Melting" ("3D-Druck / SLM-Verfahren") Anlagen gehören.

Besondere Maßnahmen zur Erwärmung und zum Halten der aus den erfindungsgemäßen Stählen E1 - E9 erzeugten Bauteilen bei hohen Temperaturen, um die Entstehung von thermisch bedingten Spannungen und dadurch ausgelösten Rissen zu minimieren, waren nicht erforderlich. Stattdessen wiesen die Bauteile, die aus Stahlpulvern erzeugt worden sind, deren Stahlpartikel aus den erfindungsgemäß legierten Stählen E1 - E9 bestanden, nach der additiven Fertigung ein Gefüge auf, das aus Martensit mit hohen Anteilen an Restaustenit besteht.

Indem die Bauteile anschließend einer optionalen Weichglühbehandlung bei 725°C über eine Dauer von 30 min unterzogen worden sind, konnte die Härte unter 350 HB eingestellt werden.

Anschließend haben die Bauteile eine Austenitisierung durchlaufen, bei der sie in konventioneller Weise über eine Dauer von 10 min bis 90 min bei einer Austenitisierungstemperatur von 850 - 1200 °C gehalten worden sind, um ihre Festigkeit und Zähigkeit einzustellen.

Schließlich sind die so austenitisierten Bauteile in ebenso konventioneller Weise zweimal über eine Dauer von jeweils 120 min einer Anlassbehandlung bei den in den Figuren für die Beispiele E1 - E6 durch Kreise markierten Anlasstemperaturen (siehe Figuren) unterzogen worden, um das Anlassverhalten zu überprüfen. Die Ergebnisse dieser Untersuchungen haben bestätigt, dass durch die Anlassbehandlung sich die Härte und die Gefügeausprägung des jeweiligen Bauteils systematisch so einstellen lassen, dass optimierte Gebrauchseigenschaften erhalten werden.

Aufgrund ihrer durch die Versuche nachgewiesenen guten Anlassbeständigkeit der Stahllegierung, aus der ihre Stahlpartikel erzeugt werden, eignen sich erfindungsgemäße Stahlpulver insbesondere für die Einzel- oder Kleinserienfertigung von Formen für den Kunststoffbau, von Werkzeughalter zur Aufnahme von Hartmetallwendeschneidplatten, für Schmiedegesenke und vergleichbare Verwendungen.

**Tabelle 1**

| Stahl | C | Si | Mn | Cr | Mo | Ni | V | W | %Mo + %W/2 | Ms |
|---|---|---|---|---|---|---|---|---|---|---|
| | Angaben in Masse-%, Rest Fe und unvermeidbare Verunreinigungen | | | | | | | | | [°C] |
| E1 | 0,39 | 1,19 | 2,53 | 5,02 | 1,75 | 0,15 | 1,02 | 0,03 | 1,765 | 215 |
| E2 | 0,41 | 1,06 | 2,49 | 4,92 | 1,85 | 0,21 | 0,92 | 0,02 | 1,86 | 212 |
| E3 | 0,38 | 1,12 | 2,55 | 4,89 | 2,05 | 0,16 | 0,99 | 0,03 | 2,065 | 208 |
| E4 | 0,41 | 1,10 | 2,40 | 4,94 | 1,27 | 0,22 | 1,02 | 1,52 | 2,03 | 210 |
| E5 | 0,42 | 1,07 | 2,57 | 5,13 | 1,30 | 0,23 | 1,03 | 2,23 | 2,415 | 207 |
| E6 | 0,37 | 1,08 | 2,45 | 5,16 | 1,23 | 0,3 | 0,91 | 0,02 | 1,24 | 221 |
| E7 | 0,41 | 1,12 | 2,51 | 6,02 | 1,28 | 0,22 | 0,97 | 0,01 | 1,285 | 174 |
| E8 | 0,40 | 1,02 | 2,43 | 6,92 | 1,27 | 0,21 | 1,01 | 0,02 | 1,28 | 162 |
| E9 | 0,39 | 1,04 | 2,52 | 8,05 | 1,24 | 0,18 | 0,95 | 0,02 | 1,25 | 154 |
| V | 0,38 | 1,04 | 0,34 | 5,23 | 1,29 | 0,23 | 0,95 | 0,01 | 1,30 | 360 |

## Patentansprüche

1. Stahlpulver für eine additive Fertigung eines Stahlbauteils, wobei das Stahlpulver aus Stahlpartikeln eines Stahls gebildet ist, der eine Martensitstarttemperatur Ms von höchstens 225 °C aufweist und, in Masse-%, aus
C: 0,30 - 0,50 %,
Si: 0,70 - 1,30%,
Mn: 1,80 - 3,20%,
Cr: 4,5 - 8,5%,
Mo und/oder W, wobei für den Gehalt %Mo an Mo und / oder den Gehalt %W an W gilt: 1,2 % ≤ %Mo + %W/2 ≤ 5 %,
V: 0,7 - 1,20 %,
optional Ni: ≤ 0,4 %,
und als Rest aus Eisen und stahltypischen Verunreinigungen besteht, die in Summe höchstens 0,6 Masse-% betragen und zu den bis zu 0,05 % P, bis zu 0,05 % S und bis zu 0,15 % N zählen.

2. Stahlpulver nach Anspruch 1, **dadurch gekennzeichnet, dass** für den Gehalt %Mo an Mo und / oder den Gehalt %W an W gilt: 1,7 % ≤ %Mo + %W/2 ≤ 5 %

3. Stahlpulver nach einem der voranstehenden Ansprüche, **d a durch gekennzeichnet, dass** der C-Gehalt des Stahlpulvers 0,35 - 0,45 Masse-% beträgt.

4. Stahlpulver nach einem der voranstehenden Ansprüche, **dadurch gekennzeichnet, dass** der Si-Gehalt des Stahls 0,90 - 1,20 Masse-% beträgt.

5. Stahlpulver nach einem der voranstehenden Ansprüche, **dadurch gekennzeichnet, dass** der Mn-Gehalt des Stahls 2,00 - 3,00 Masse-% beträgt.

6. Stahlpulver nach einem der voranstehenden Ansprüche, **dadurch gekennzeichnet, dass** der Cr-Gehalt 4,75 - 5,35 Masse-% beträgt.

7. Stahlpulver nach einem der voranstehenden Ansprüche, **dadurch gekennzeichnet, dass** der V-Gehalt 0,80 - 1,10 Masse-% beträgt.

8. Stahlpulver nach einem der voranstehenden Ansprüche, **dadurch gekennzeichnet, dass** der P-Gehalt des Stahls auf höchstens 0,030 Masse-% beschränkt ist.

9. Stahlpulver nach einem der voranstehenden Ansprüche, **dadurch gekennzeichnet, dass** der S-Gehalt des Stahls auf höchstens 0,020 Masse-% beschränkt ist.

10. Stahlpulver nach einem der voranstehenden Ansprüche, **dadurch gekennzeichnet, dass** der N-Gehalt des Stahls auf höchstens 0,10 Masse-% beschränkt ist.

11. Stahlpulver nach einem der voranstehenden Ansprüche, **dadurch gekennzeichnet, dass** mehr als 90 % der Stahlpartikel einen Partikeldurchmesser von 10 µm bis 65 µm aufweisen.

12. Verwendung eines Stahls, der eine Martensitstarttemperatur Ms von höchstens 225 °C aufweist und, in Masse-%, aus
C: 0,30 - 0,50 %,
Si: 0,70 - 1,30 %,
Mn: 1,80 - 3,20 %,
Cr: 4,5 - 8,5%,
Mo und/oder W, wobei für den Gehalt %Mo an Mo und / oder den Gehalt %W an W gilt: 1,2 % ≤ %Mo + %W/2 ≤ 5 %,
V: 0,7 - 1,20 %,
optional Ni: ≤ 0,4 %,
und als Rest aus Eisen und stahltypischen Verunreinigungen besteht, die in Summe höchstens 0,6 Masse-% betragen und zu den bis zu 0,05 % P, bis zu 0,05 % S und bis zu 0,15 % N zählen, zur Erzeugung von Stahlpartikeln eines Stahlpulvers zur Herstellung von Stahlbauteilen durch ein additives Verfahren.

13. Verfahren zum Herstellen eines Stahlbauteils in einem additiven Verfahren, bei dem in einem mehrfach wiederholten Arbeitsablauf auf einer Heizplatte, die auf eine Heiztemperatur aufgeheizt ist, zum Aufbau des Bauteils Stahlpulver aufgetragen wird, das aufgetragene Stahlpulver mittels Elektronen- oder Laserstrahl zu einer Schmelzenportion aufgeschmolzen wird und die jeweils aufgeschmolzene Schmelzenportion zu einem festen Abschnitt des Stahlbauteils abgekühlt wird, **dadurch gekennzeichnet,**
- **dass** als Stahlpulver ein gemäß einem der Ansprüche 1 - 11 beschaffenes Stahlpulver verwendet wird,
- **dass** das Bauteil während der Herstellung mittels der Heizplatte auf einer Temperatur gehalten wird, die 125 °C - 225 °C beträgt,
- **dass** das fertig geformte Bauteil optional einer Weichglühbehandlung unterzogen wird, bei der es auf einer Temperatur von 650 -750 °C gehalten wird,
- **dass** das fertig geformte Bauteil bei einer 850 - 1200 °C betragenden Austenitisierungstemperatur über eine metallurgische Haltezeit von mehr als 10 min austenitisiert wird,
und
- **dass** das austenitisierte Bauteil einer Anlassbehandlung bei einer 180 - 625 °C betragenden Anlasstemperatur unterzogen wird.

14. Verfahren gemäß Anspruch 13, **dadurch gekennzeichnet, dass** die Dauer der optional durchgeführten Weichglühbehandlung mindestens 15 min beträgt.

15. Verfahren gemäß einem der Ansprüche 13 oder 14, **dadurch gekennzeichnet, dass** die Heiztemperatur der Heizplatte höchstens 200 °C beträgt.
